## Europäisches Patentamt

## European Patent Office

## Office européen des brevets

(11) Veröffentlichungsnummer: **0 149 453**
**B1**

(12) # EUROPÄISCHE PATENTSCHRIFT

(45) Veröffentlichungstag der Patentschrift:
02.11.88

(51) Int. Cl.⁴: **B 60 D 1/02**

(21) Anmeldenummer: **85100046.3**

(22) Anmeldetag: **02.01.85**

(54) **Anhängerkupplung.**

(30) Priorität: **11.01.84 DE 3400707**

(43) Veröffentlichungstag der Anmeldung:
**24.07.85 Patentblatt 85/30**

(45) Bekanntmachung des Hinweises auf die Patenterteilung:
**02.11.88 Patentblatt 88/44**

(84) Benannte Vertragsstaaten:
**AT CH DE FR GB IT LI NL SE**

(56) Entgegenhaltungen:
**DE-A-2 458 977**
**DE-A-3 226 360**
**DE-B-1 292 512**
**DE-U-1 677 678**

(73) Patentinhaber: **ROCKINGER Spezialfabrik für Anhängerkupplungen GmbH & Co.,
Orleansstrasse 12 Postfach 80 14 44, D-8000 München 80 (DE)**

(72) Erfinder: **Breu, Johann, Allgäuer Strasse 7, D-8000 München 71 (DE)**

(74) Vertreter: **Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Anhängerkupplung nach dem Oberbegriff des Anspruchs 1.

Eine solche Anhängerkupplung ist durch offenkundige Vorbenutzung einer Anhängerkupplung Typ SU 06 der Firma ADE, Offenburg, aus dem Jahre 1956 bekannt. Bei der bekannten Ausführungsform ist die Ausnehmung in dem Kupplungsbolzen nach oben geschlossen, und der Ausrücknocken ist von dem Aufwerfhebel räumlich getrennt. Der Ausrücknocken kann somit nicht zur Steifigkeit des Aufwerfhebels beitragen.

Der Erfindung liegt die Aufgabe zugrunde, eine Lösung anzugeben, bei welcher der Ausrücknocken gleichzeitig eine Versteifung des Aufwerfhebels bringt. Die Bedeutung dieser Aufgabe ist ohne weiteres ersichtlich, wenn man bedenkt, daß der Aufwerfhebel gelegentlich erhebliche Kräfte zu übertragen hat, insbesondere wenn der Kupplungsbolzen aus irgendwelchen Gründen verklemmt, daß aber andererseits die Ausnehmung des Kupplungsbolzens für die Aufnahme des Sicherungshebels im Hinblick auf die Beanspruchung des Kupplungsbolzens nicht beliebig vergrößert werden kann.

Zur Lösung dieser Aufgabe werden die Maßnahmen nach dem kennzeichnenden Teil des Anspruchs 1 vorgeschlagen.

Zum Stand der Technik ist auch noch eine aus der DE-B-2 458 977 bekannte Lösung zu erwähnen, bei der der Aufwerfhebel (Hubzunge) und ein mit dem zusätzlichen Kontrollbolzen zusammenwirkender Bedienungshebel eine Gabel bilden. Der Aufwerfhebel greift dabei in einen nach oben geschlossenen Durchgang des Kupplungsbolzens ein, während der Bedienungsarm an der oberen Endfläche des Kupplungsbolzens aufliegt und dabei eine Niederhaltefunktion erfüllt. Der zusätzliche Kontrollbolzen liegt dabei nicht direkt an dem Kupplungsbolzen an, sondern nur mittelbar über eine Kalotte des Bedienungsarms. Es ist deshalb nicht auszuschließen, daß nach unterstelltem Wegfall der Sicherung des Kupplungsbolzens durch den Aufwerfhebel auch eine zusätzliche Sicherung durch den zusätzlichen Kontrollbolzen aufgehoben wird, indem der Bedienungsarm etwa bei einer aufwärts gerichteten Beschleunigung des Kupplungsbolzens den zusätzlichen Kontrollbolzen aus seiner Sicherungsstellung zur Seite rückt. Außerdem wird bei dieser Lösung die Bauhöhe der Kupplung durch den auf dem oberen Ende des Kupplungsbolzens aufliegenden Bedienungsarm in unerwünschter Weise erhöht. Insbesondere in der Nicht-Kupplungsstellung des Kupplungsbolzens ragt nämlich der Bedienungsarm erheblich über das obere Ende des Kupplungsbolzens nach oben hinaus. Schließlich ist auch bei dieser bekannten Ausführungsform der Bedienungsarm von dem Aufwerfhebel (Hubzunge) zufolge der Gabelung derart getrennt, daß der Bedienungsarm nicht zu einer Versteifung des Aufwerfhebels beitragen kann.

Bei der erfindungsgemäßen Lösung wird der Aufwerfhebel durch den Ausrücknocken versteift, ohne daß es im Hinblick auf diese Versteifung einer schädlichen Vergrösserung der Ausnehmung in dem Kupplungsbolzen bedarf.

Es ist nicht notwendig, daß der Ausrücknocken den zusätzlichen Sicherungsbolzen vollständig ausrückt und ausgerückt hält. Diese Aufgabe kann vielmehr auch nach einmal erfolgter Einleitung der Ausrückbewegung durch den Ausrücknocken von dem Kupplungsbolzen selbst übernommen werden, wie in Anspruch 2 angegeben. Wichtig ist aber, daß der zusätzliche Sicherungsbolzen nicht auf seinem ganzen Ausrückweg von dem Kupplungsbolzen ausgerückt werden kann, denn dadurch könnte die selbständige und unabhängige Sicherungsfunktion beeinträchtigt werden. Deshalb ist es notwendig, daß die Ausrückbewegung des zusätzlichen Sicherungsbolzens nur von dem Ausrücknocken eingeleitet werden kann.

Die erfindungsgemäße Lösung ist in Verbindung mit Fernbedienungseinrichtungen anwendbar. Dabei können die Übertragungsmittel für die Kupplungsbetätigung an beliebiger Stelle angreifen, insbesondere an einer Betätigungswelle oder einem besonderen Fernbedienungshebelarm der Betätigungswelle. Bei Fernbedienung ist es häufig erwünscht, auch eine Fernkontrolle einzuführen. Für die Fernkontrolle ist beispielsweise eine Lösung gemäß Anspruch 3 denkbar. Bei dieser Lösung wird dem Führer im Führerhaus eine Anzeige darüber geliefert, ob der zusätzliche Sicherungsbolzen in Sicherungsstellung sich befindet. Eine solche Anzeige impliziert, daß der Kupplungsbolzen sich in der Kupplungsstellung befindet, weil der zusätzliche Sicherungsbolzen nur dann in die Sicherungsstellung gehen kann, wenn der Kupplungsbolzen in der Kupplungsstellung steht.

Die erfindungsgemäße Ausbildung ist in Verbindung mit verschiedenen Ausführungsformen von Kupplungsautomatik verwendbar, beispielsweise in Verbindung mit Ausführungsformen, bei denen der Aufwerfhebel unmittelbar auf einer Betätigungswelle mit Betatigungshandgriff sitzt. Es ist aber auch denkbar, die erfindungsgemäße Lösung entsprechend dem Anspruch 5 in Verbindung mit einer Automatik zu verwenden, bei der der Aufwerfhebel der Einwirkung eines Mitnahme- und Abstützhebels unterliegt, der seinerseits auf der Betätigungswelle sitzt.

Die beiliegenden Figuren erläutern die Erfindung anhand von Ausführungsbeispielen; es stellen dar:

Fig. 1 bis 12 die verschiedenen Betriebszustände einer Anhängerkupplung, bei welcher die Erfindung anwendbar ist;

Fig. 13 eine erfindungsgemäße Anhängerkupplung in der Kupplungsstellung, teilweise im Schnitt senkrecht zur Aufwerfhebelschwenkachse;

Fig. 14 einen Schnitt nach Linie XIV - XIV der Fig. 13;

Fig. 15 einen Schnitt entsprechend demjenigen der Fig. 13 in einer Zwischenstellung während des Oberganges des Aufwerfhebels aus seiner Sicherungsstellung in seine Haltestellung;

Fig. 16 einen Schnitt nach Linie XVI - XVI der Fig. 15;

Fig. 17 einen Schnitt entsprechend demjenigen der Fig. 13 und 15 in der Nicht-Kupplungsstellung des Kupplungsbolzens;

Fig. 18 einen Schnitt nach Linie XVIII - XVIII der Fig. 17;

Fig. 19 einen Schnitt entsprechend demjenigen der Fig. 14 mit einem Positionsfühler für den zusätzlichen Sicherungsbolzen und

Fig. 20 einen Schnitt nach Linie XX - XX der Fig. 19.

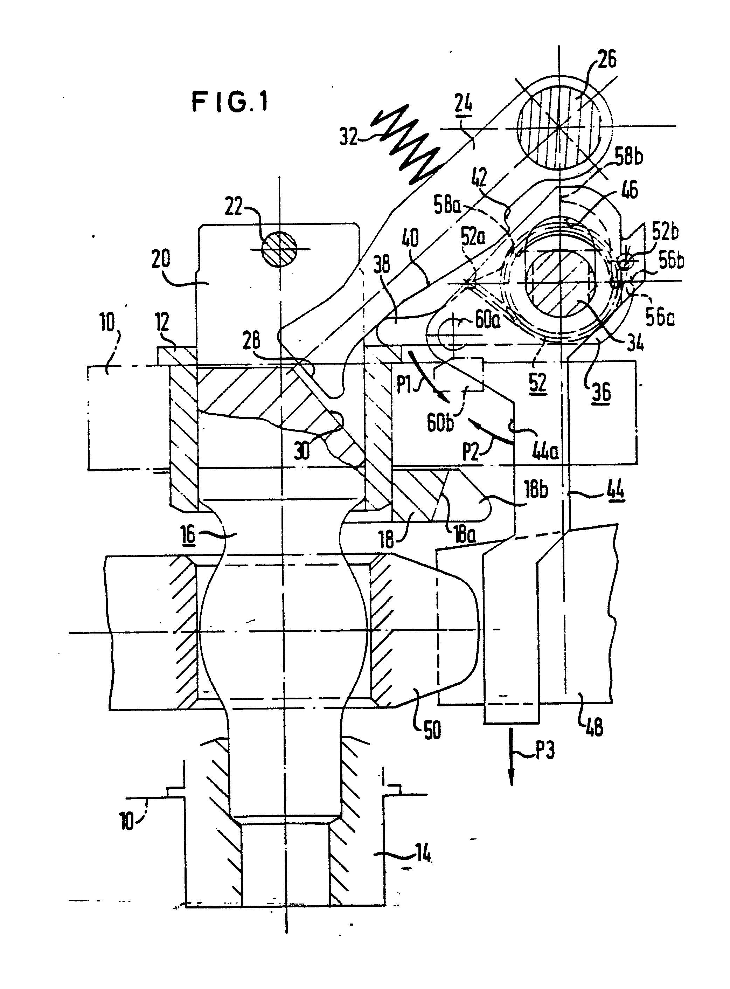

In Fig. 1 ist der Kupplungskörper mit 10 bezeichnet. Dieser Kupplungskörper 10 weist Führungsbuchsen 12 und 14 für einen Kupplungsbolzen 16 auf. Der Kupplungskörper 10 trägt das Kupplungsmaul, von dem lediglich der obere Lappen 18 eingezeichnet ist. Der Kupplungsbolzen 16 befindet sich in Fig. 1 in der Kupplungsstellung. Am oberen Ende ist der Kupplungsbolzen 16 mit einem Schlitz 20 versehen, der von einem Anhebebolzen 22 überbrückt ist. In den Schlitz 20 greift ein Aufwerfhebel 24 ein, der auf einer im Kupplungskörper angeordneten Aufwerfhebelschwenkachse 26 drehbar gelagert ist. Der Aufwerfhebel 24 steht mit seinem freien Ende 28 einer Abschrägung 30 des Schlitzbodens gegenüber, so daß der Kupplungsbolzen 16 in der gezeichneten Kupplungsstellung durch den Aufwerfhebel 24 gesichert ist. Der Aufwerfhebel 24 ist in seine in Fig. 1 dargestellte Sicherungsstellung durch eine schematisch angedeutete erste Feder 32 vorgespannt.

In dem Kupplungskörper ist ferner eine Betätigungswelle 34 drehbar gelagert. Auf dieser Betätigungswelle 34 sitzt unverdrehbar ein Abstützhebel 36, der eine Mitnahme- und Abstützspitze 38 aufweist. Die Mitnahme- und Abstützspitze 38 liegt an einer Mitnahmekante 40 des Aufwerfhebels 24 an und kann in eine Stützrast 42 des Aufwerfhebels 24 einrasten.

Auf der Betätigungswelle 34 ist ein Auslösehebel 44 mittels eines Langlochs 46 verschiebbar und schwenkbar gelagert. Das untere Ende des Auslösehebels 44 ist zwischen zwei Anschlagbacken 48 für eine Zugöse 50 angeordnet und steht der Zugöse 50 an deren in dem Kupplungskörper einfahrenden Ende gegenüber Eine um die Betätigungswelle 34 oder eine Nabe des Abstützhebels 36 gewickelte und gegenüber der Betätigungswelle 34 verdrehbare Drehfeder 52 stützt sich mit ihrem einen Ende 52a an dem Abstützhebel 36 ab und greift mit ihrem anderen Ende 52b an dem Auslösehebel 44 an.

Diese Drehfeder versucht den Abstützhebel 36 und den Auslösehebel 44 einander im Sinne der Drehpfeile P1, P2 anzunähern. Außerdem versucht sie, den Auslösehebel 44 mit seinem Langloch 46 gegenüber der Betätigungswelle 34 in Richtung des Verschiebepfeils P3 nach unten zu verschieben. In Fig. 1 liegt die Mitnahme- und Abstützspitze 38 des Abstützhebels 36 auf der Buchse 12 auf, und der Aufwerfhebel 24 liegt mit seiner Mitnahmekante 40 auf der Mitnahme- und Abstützspitze 38 auf. Der Auslösehebel 44 ist in der in Fig. 1 gezeichneten Dreh- und Schiebestellung entgegen der Wirkung der Drehfeder 52 dadurch festgehalten, daß ein Mitnahmeanschlag 56a des Abstützhebels 36 an einem Mitnahmeanschlag 56b des Auslösehebels 44 anliegt.

An dem Abstützhebel 36 ist ein Lösemomentübertragungsanschlag 58a angebracht, der mit einem Lösemomentübertragungsanschlag 58b des Auslösehebels 44 zusammenwirken kann.

An dem Abstützhebel 36 ist ferner ein Steueranschlag 60a angebracht, der mit einem Steueranschlag 60b des Kupplungskörpers zusammenwirken kann.

Es ist zu bemerken, daß gemäß Fig. 1 die Steueranschläge 60a und 60b voneinander einen gewissen Abstand haben, so daß das Einfahren der Zugöse 50 über eine vorbestimmte Stellung hinaus, etwa in Folge von Abnutzung der Zugöse 50 oder der Anschlagbacken 48, nicht zu einer zerstörenden Einwirkung auf den Auslösehebel 44 führen sondern dieser in der Fig. 1 nach rechts ausweichen kann.

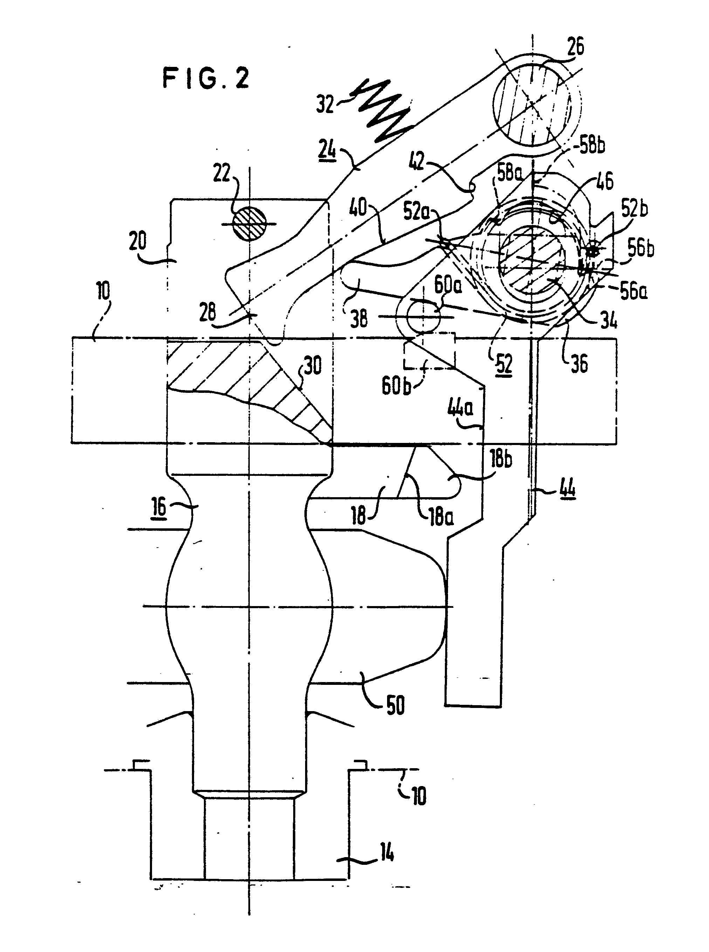

In Fig. 2 ist die Betätigungswelle 34 durch Handeinwirkung gegenüber Fig. 1 im Uhrzeigersinn verdreht worden, so daß die Mitnahme- und Abstützspitze 38 begonnen hat, den Aufwerfhebel 24 ebenfalls im Uhrzeigersinn zu verdrehen. Der Mitnahmeanschlag 56b ist dem Mitnahmeanschlag 56a nach unten gefolgt, so daß sich der Auslösehebel 44 gleichzeitig im Uhrzeigersinn verdreht und nach unten verschoben hat, der Steueranschlag 60a gegen den Steueranschlag 60b und der Auslösehebel 44 gegen die Zugöse 50 angefahren ist. Die damit erreichte Stellung des Auslösehebels 44 wird im Patentanspruch 2 als die erste Betriebsstellung bezeichnet, während die Stellung des Auslösehebels 44 gemäß Fig. 1 im Anspruch 3 als die dritte Betriebsstellung bezeichnet ist.

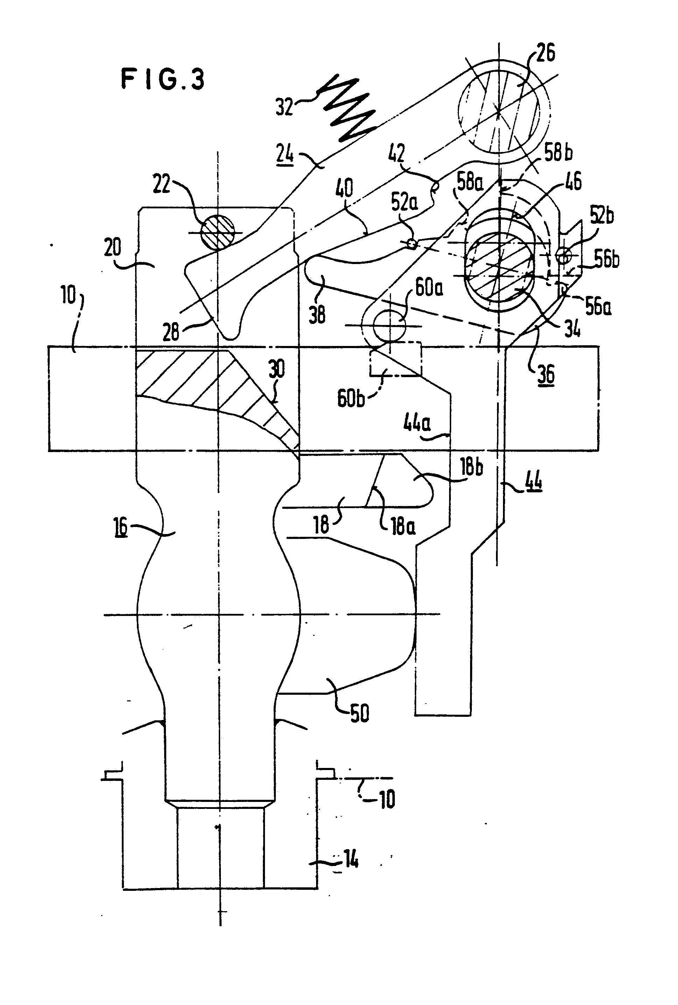

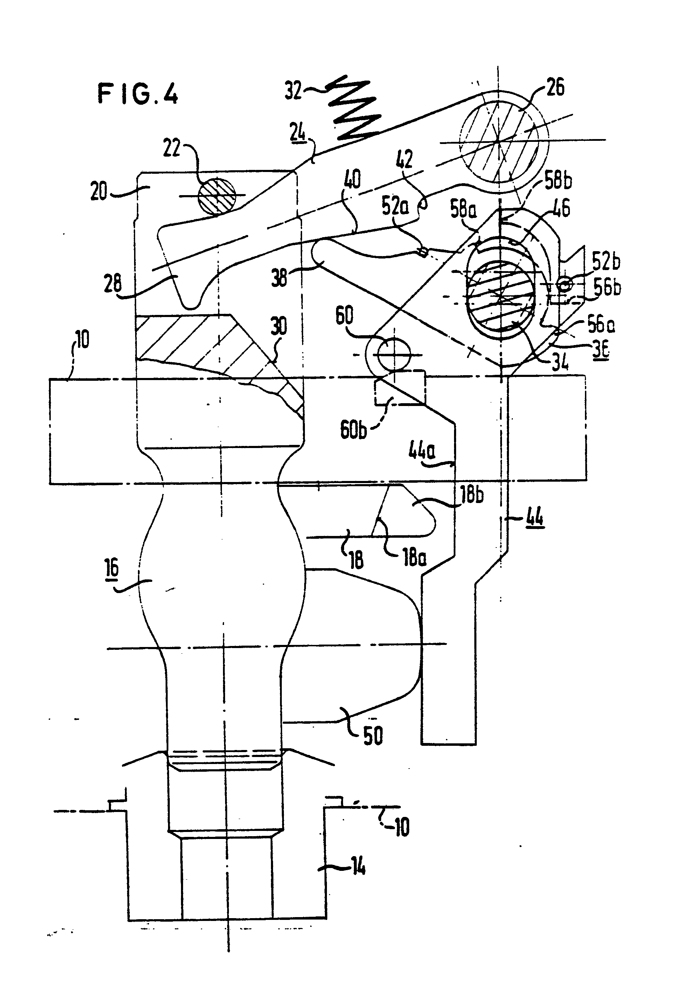

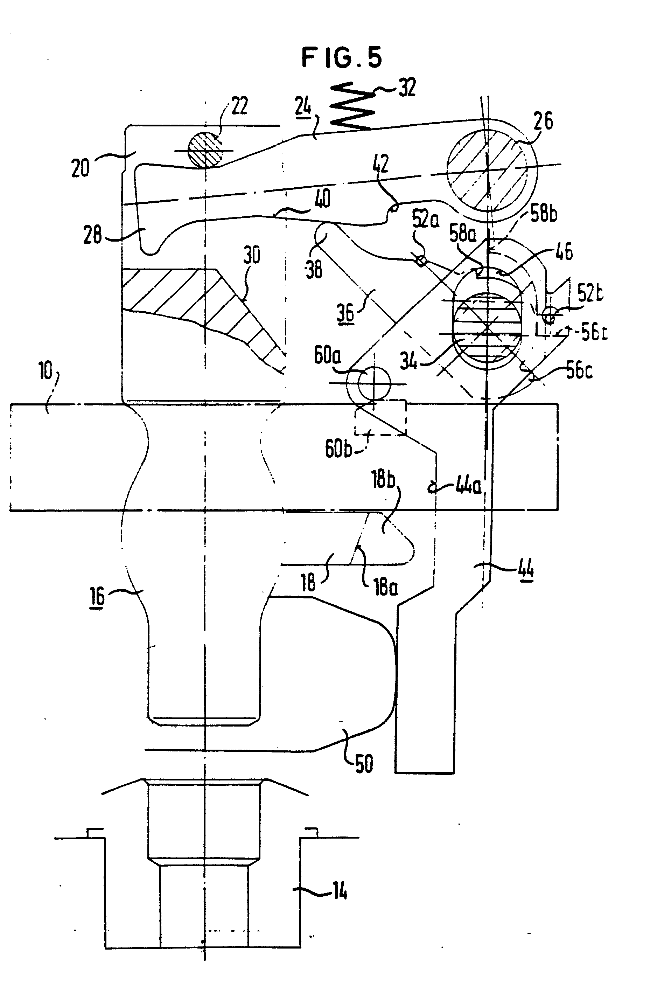

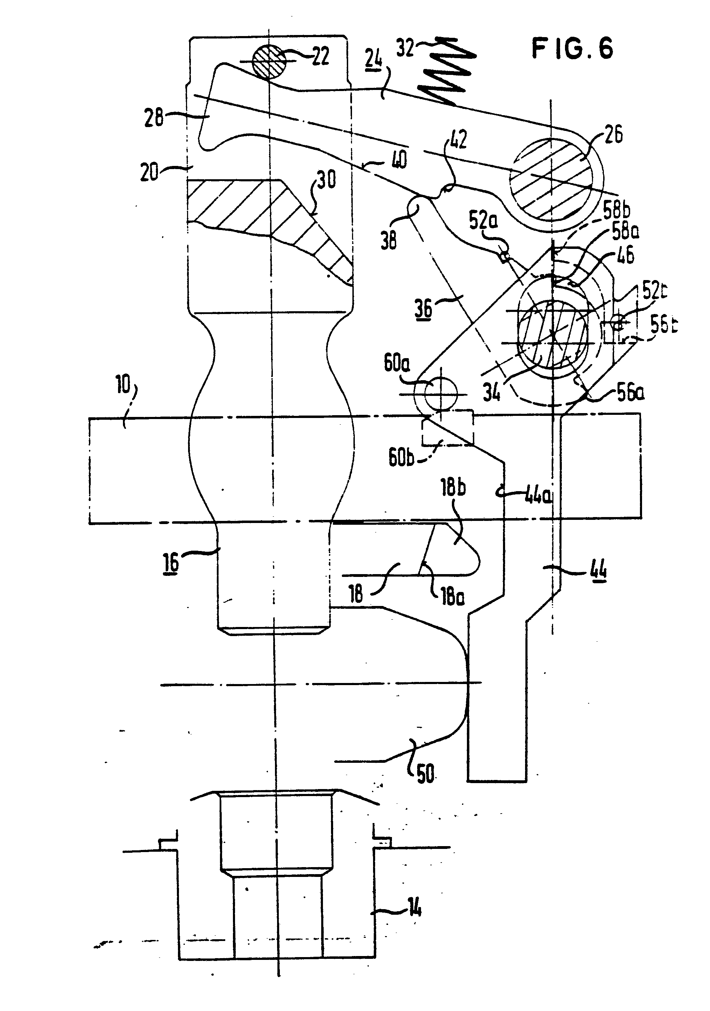

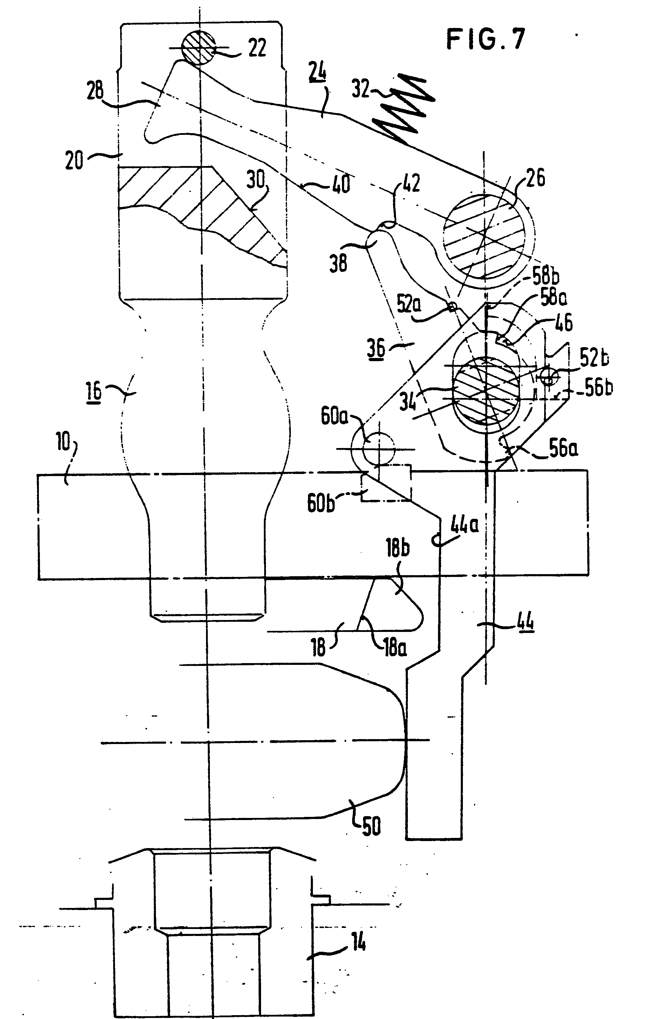

In den Fig. 3 bis 7 ist der Abstützhebel 36 von Figur zu Figur jeweils ein Stück weiter im Uhrzeigersinn verdreht worden; demgemäß wurde auch der Aufwerfhebel 24 weiter im Uhrzeigersinn verdreht, hat sich aus der Sicherungsstellung von der Abschrägung 30 entfernt und über den Anhebebolzen 22 den Kupplungsbolzen 16 aus seiner Kupplungsstellung gemäß Fig. 1 nach oben gehoben, wobei in Fig. 7 die Nicht-Kupplungsstellung des Kupplungsbolzens 16 erreicht worden ist, in der die Zugöse 50 aus- und einfahren kann. Die Stellung des Auslösehebels (erste Betriebsstellung) ist unverändert geblieben und nach wie vor durch die Anlage des Auslösehebels 44 an der Zugöse 16 und durch die Anlage der Steueranschläge 60a, 60b aneinander bestimmt.

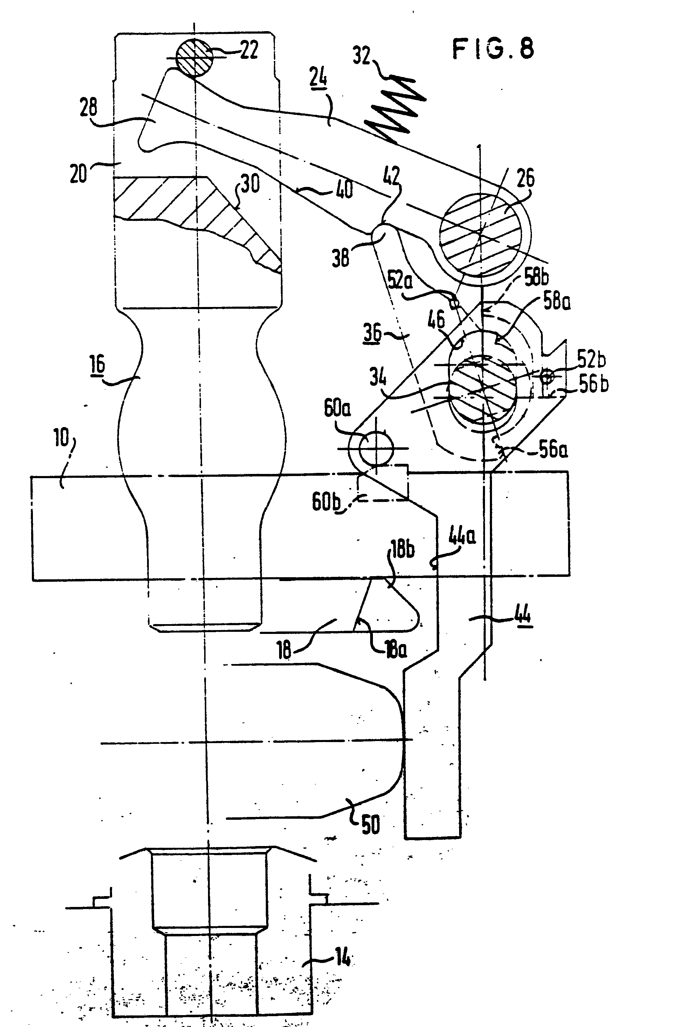

In Fig. 8 ist die Mitnahme- und Abstützspitze 38 des Abstützhebels 34 in die Abstützkerbe 42 des Aufwerfhebels 24 eingetreten. Der Aufwerfhebel 24 verbleibt nunmehr in der in Fig. 8 dargestellten Haltestellung durch den in der Abstützstellung befindlichen Abstützhebel 36, auch wenn au die Betätigungswelle 34 kein äußeres Moment mehr einwirkt. Der Auslösehebel 44 nimmt auch in Fig. 8 noch seine erste Betriebsstellung ein. In Fig. 8 ist derjenige Betriebszustand erreicht, in welchem die Zugöse aus der Kupplung ausfahren kann, etwa durch Vorfahren des Zugfahrzeugs gegenüber dem Anhänger. Dabei braucht während des Entkuppelns von Zugfahrzeug und Anhänger keine Hand an die Kupplung gelegt zu werden.

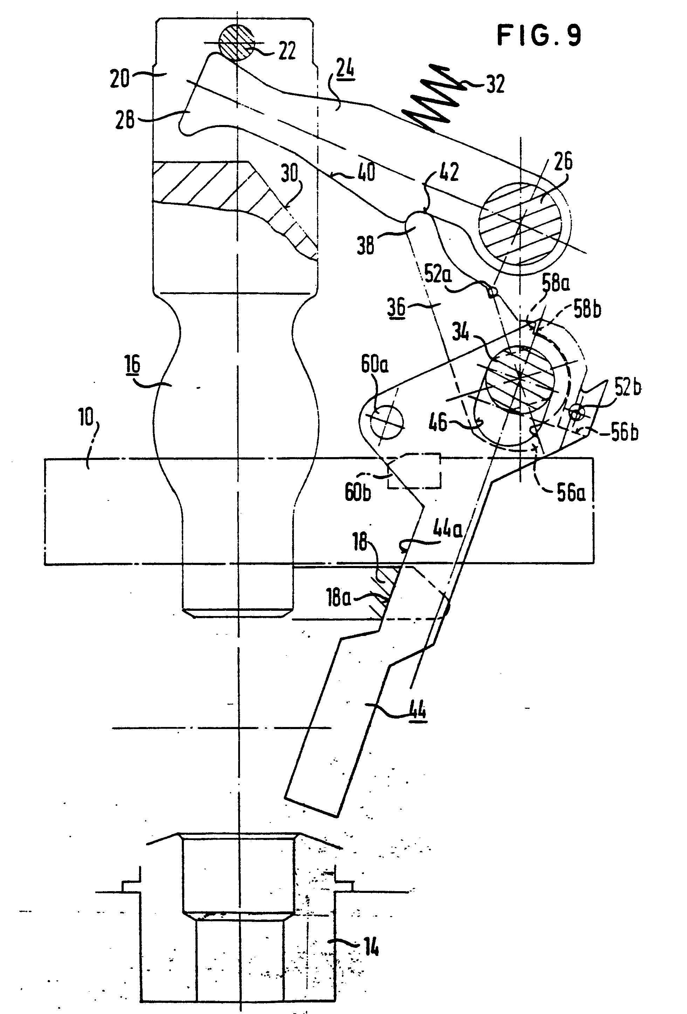

In Fig. 9 ist die Zugöse 50 aus dem Kupplungskörper herausgefahren; der Auslösehebel 44 hat seine Abstützung an der Zugöse verloren und ist unter der Wirkung der Drehfeder 52 in die in Fig. 9 dargestellte Betriebsstellung übergegangen, in der er mit dem oberen Ende des Langlochs 46 an der Betätigungswelle 34 anliegt und mit einer Kante 44a an einer Anschlagfläche 18a des Kupplungsmauls anliegt. Diese Anschlagfläche 18a bildet den Grund eines Schlitzes 18b in dem oberen Lappen 18 des Einführungsmauls so daß das Einführungsmaul nunmehr nach ausgefahrener Zugöse durch den Auslösehebel 44 gegen Verdrehen um die Achse des Kupplungsbolzens 16 gesperrt ist. Der Lösemomentübertragungsanschlag 58b des Auslösehebels 44 befindet sich nunmehr in Eingriffsbereitschaftsstellung gegenüber dem Lösemomentübertragungsanschlag 58a des Abstützhebels 36. Diese Stellung des Auslösehebels 44 ist in Anspruch 2 als dessen zweite Betriebsstellung bezeichnet. Der Aufwerfhebel 24 ist nach wie vor durch den Abstützhebel 36 in seiner Haltestellung gestützt, so daß der Kupplungsbolzen 16 nach wie vor in seiner Nicht-Kupplungsstellung steht.

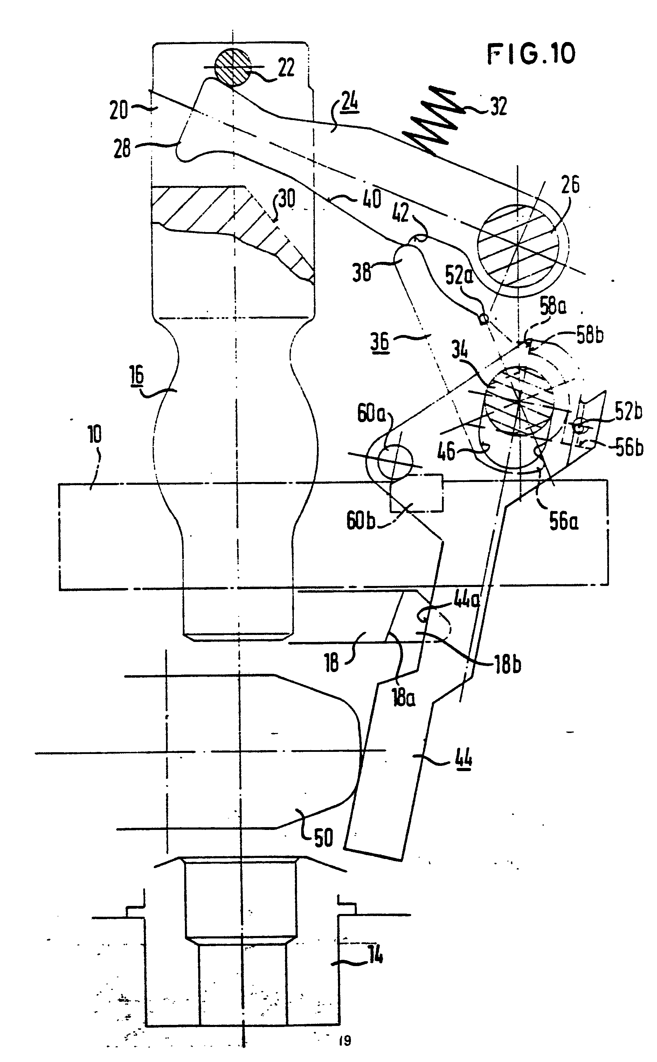

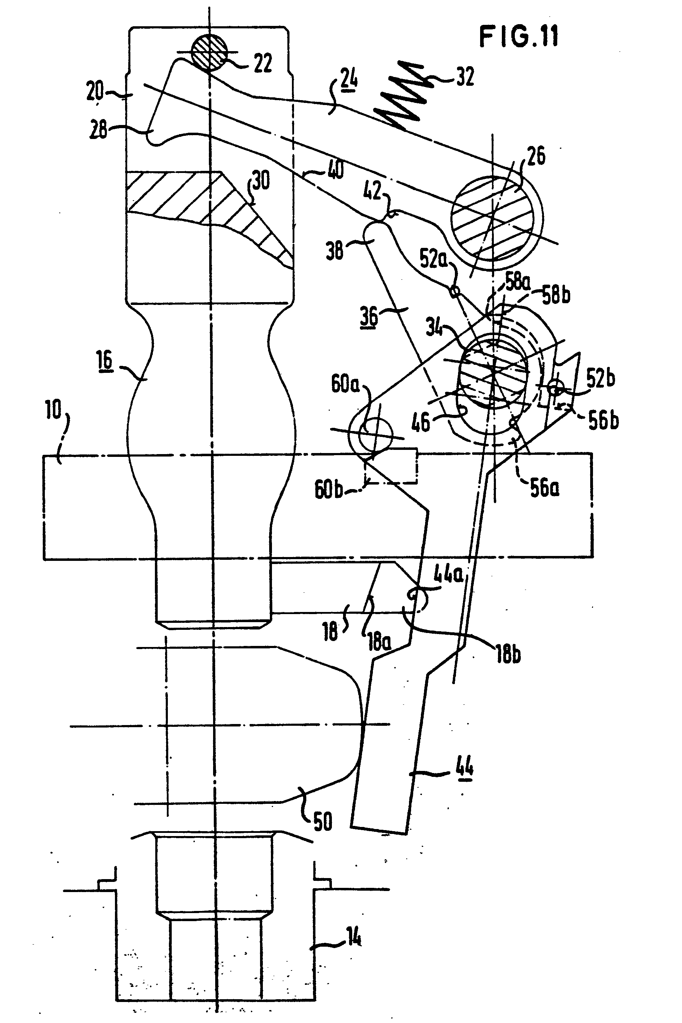

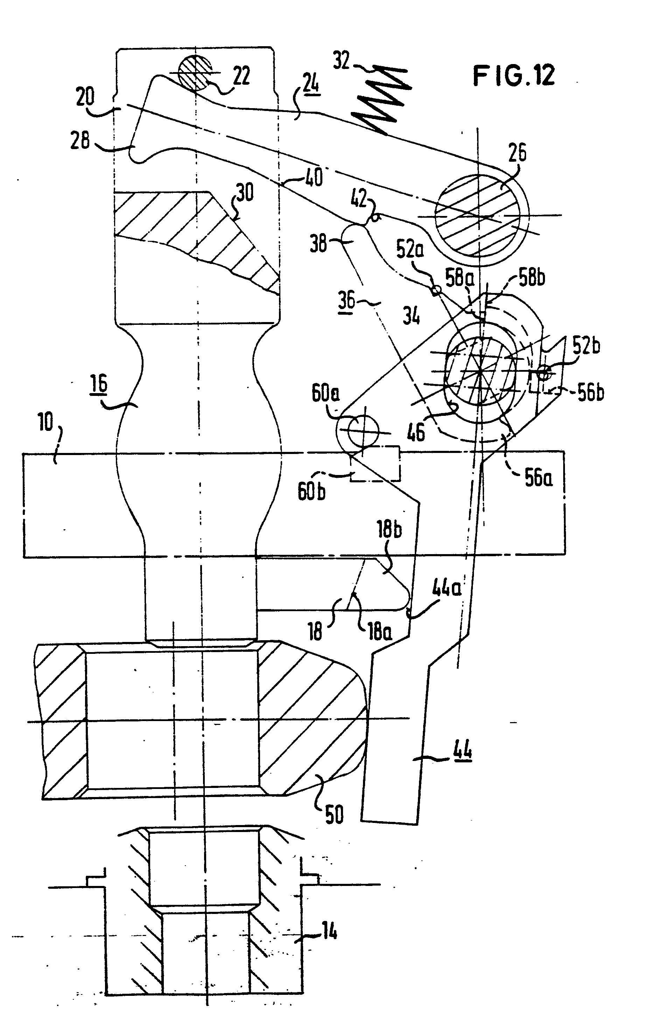

Gemäß Fig. 10 fängt die Zugöse 50 gerade an in den Kupplungskörper einzufahren. Dabei ist der Auslösehebel 44 gegenüber den Zustand gemäß Fig. 9 bereits soweit um die Betätigungswelle 34 verschwenkt worden, daß der Steueranschlag 60a gegen den Steueranschlag 60b getreten ist. Durch die Lösemomentübertragungsanschläge 58a und 58b ist dabei der Abstützhebel 36 im Gegenzeigersinn soweit verschwenkt worden, daß sich die Mitnahme- und Abstützspitze 38 aus der Abstützkerbe 42 herausbewegt hat. Gemäß Fig. 11 ist durch weiteres Einfahren der Zugöse 50 der Auslösehebel 44 weiter im Gegenzeigersinn um die Betätigungswelle 34 geschwenkt und gleichzeitig mit seinem Langloch 46 gegenüber der Betätigungswelle 34 nach oben verschoben worden, wodurch die Lösemomentübertragungsanschläge 58a und 58b begonnen haben sich voneinander zu lösen. Die Stellung gemäß Fig. 11 ist als eine Momentaufnahme zu betrachten, die nur unendlich kurze Zeit vorhält, da die Mitnahme- und Abstützspitze 38 bereits aus der Abstützkerbe 42 herausgetreten ist und die starke Feder 32 den Aufwerfhebel 24, den Abstützhebel 36 und den Kupplungsbolzen 16 schlagartig nach unten gehen läßt. Eine weitere solche Momentaufnahme ist in Fig. 12 dargestellt, in der sich die Lösemomentübertragungsanschläge 58a und 58b bereits vollständig voneinander gelöst haben, so daß der Lösehebel 44 wieder in die erste Betriebsstellung gemäß den Fig. 2 bis 8 getreten ist.

Beim weiteren Übergang von Fig. 12 zu Fig. 1 trifft der Mitnahmeanschlag 56a auf den Mitnahmeanschlag 56b und führt damit den Auslösehebel 44 in die Betriebsstellung gemäß Fig. 1 zurück, die im Anspruch 3 als die dritte Betriebsstellung des Auslösehebels bezeichnet ist.

Bei der erfindungsgemäßen Lösung ist der Platzbedarf insofern gering, als die Betätigungswelle 34 unterhalb der Aufwerfhebelschwenkachse 26 liegt. Dies bedeutet, daß der Weg des freien Endes eines mit der Betätigungswelle 34 verbundenen Handbetätigungshebels dem äußeren Umriß der Kupplung angenähert ist und somit bei Erfüllung der geforderten Freiräume länger gehalten werden kann.

Weiterhin ist zu beachten, daß bei der erfindungsgemäßen Lösung günstige Verhältnisse für die Geringhaltung der am Handbetätigungshebel aufzubringenden Handbetätigungskraft geschaffen sind. Die Handbetätigungskraft ist durch das Zusammenwirken des Abstützhebels 36 mit dem Aufwerfhebel 24 wesentlich geringer gehalten, als wenn der Aufwerfhebel 24 über eine Aufwerfhebelschwenkwelle direkt mit dem Handbetätigungshebel verbunden wäre.

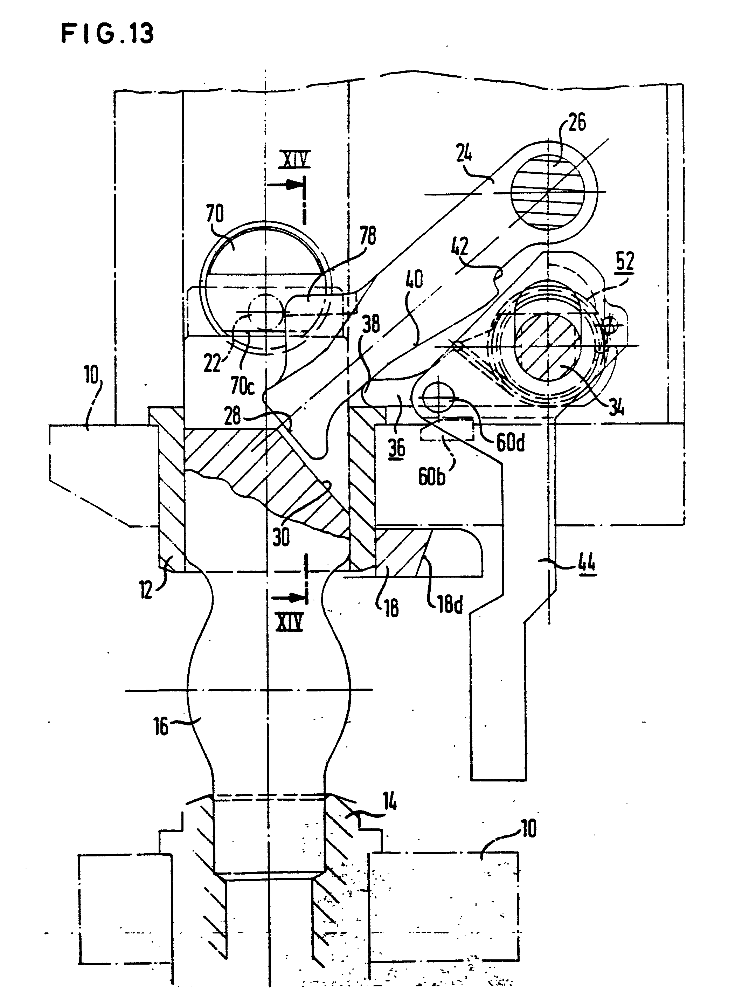

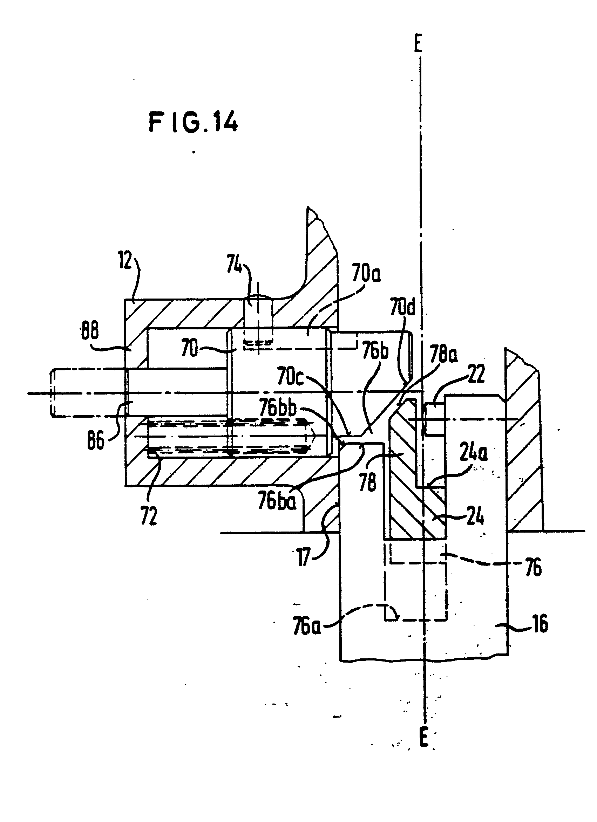

In den Figuren 13 bis 18 erkennt man über die Darstellung in den Figuren 1 bis 12 hinaus einen zusätzlichen Sicherungsbolzen 70. Dieser zusätzliche Sicherungsbolzen 70 ist in dem Kupplungskörper 12 in einer Richtung parallel zur Richtung der Aufwerfhebelschwenkachse 26 verschiebbar geführt. Eine Schraubendruckfeder 72 spannt den Sicherungsbolzen 70 in die Sicherungsstellung gemäß Fig. 14 vor. Zur Verdrehungssicherung und eventuell zur Beschränkung der Verschiebbarkeit des Sicherungsbolzens 70 ist ein Zapfen 74 vorgesehen, der in eine Längsnut 70a des Sicherungsbolzens eingreift.

Der Kupplungsbolzen 16 weist an seinen oberen Ende einen gestuften Schlitz 76 auf mit einer ersten tieferen Schlitzstufe 76a und einer zweiten weniger tiefen Schlitzstufe 76b. Die zweite Schlitzstufe 76b ist, wie aus Fig. 14 zu ersehen, nach der Seite offen. Die erste tiefere Schlitzstufe 76a liegt zentrisch zu der vertikalen, die Achse des Kupplungsbolzens 16 enthaltenden und zur Aufwerfhebelschwenkachse 26 senkrechten Ebene E - E. Die erste tiefere Schlitzstufe ist ungefähr auf die Hälfte ihrer Breite von dem Mitnahme und Haltezapfen 22 überbrückt. An dem Aufwerfhebel 24 ist eine Mitnahme- und Haltefläche 24a angebracht, die zum Zusammenwirken mit dem Mitnahme- und Haltezapfen 22 bestimmt ist.

In demjenigen Teil der ersten Schlitzstufe 76a, die nicht von dem Mitnahme- und Haltezapfen 22 überbrückt ist, ist auf dem Aufwerfhebel 24 eine Überhöhung 78 angebracht, die einen Ausrücknocken für den zusätzlichen Sicherungsbolzen 70 bildet. Die Überhöhung 78 ist zu diesem Zwecke mit einer Nockenfläche 78a ausgeführt, welche einer Schrägfläche 70d des Sicherungsbolzens 70 gegenübersteht. Der Schlitzgrund 76ba der zweiten Schlitzstufe 76b steht der Unterkante 70c des zusätzlichen Sicherungsbolzens 70, wie aus Fig. 14 ersichtlich, gegenüber, wenn der Kupplungsbolzen sich in der Kupplungsstellung gemäß Fig. 13 befindet, in der er zum einen durch den Aufwerfhebel 24 und zum anderen durch den Sicherungsbolzen 70 gegen Aufwärtsbewegung gesichert ist. Wenn aus irgendwelchen Gründen der Aufwerfhebel 24 seine Sicherungsfunktion verlieren würde, so könnte der Kupplungsbolzen 16 immer noch nicht nach oben auswandern, weil die von dem Schlitzgrund 76ba gebildete Anschlagfläche gegen die Unterkante 70c des Sicherungsbolzens anschlagen würde.

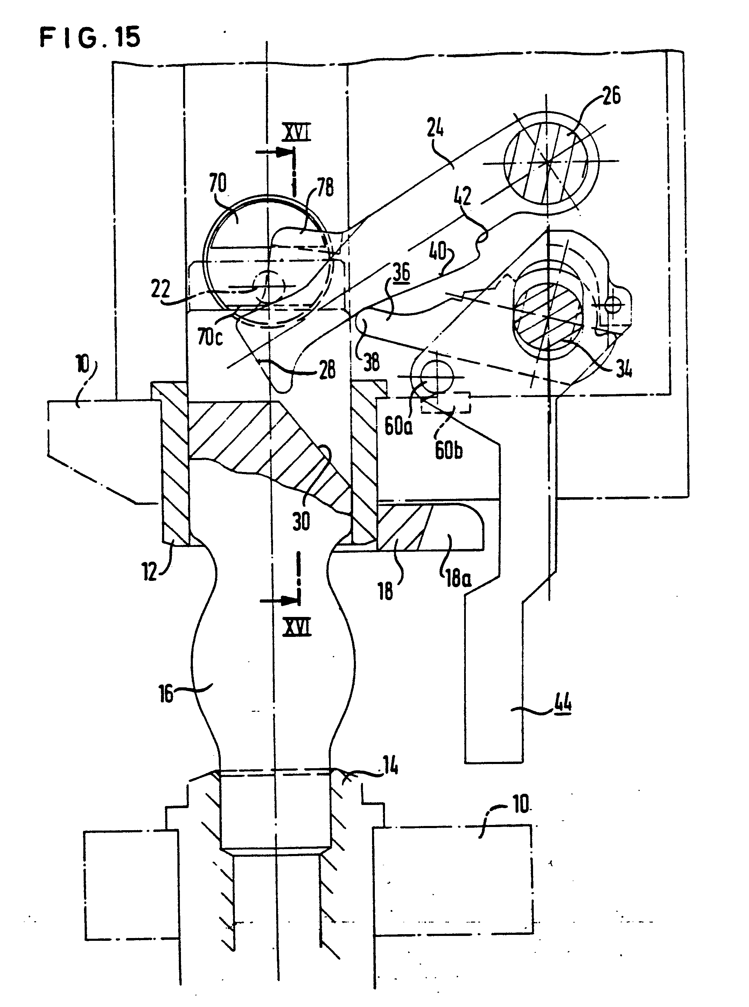

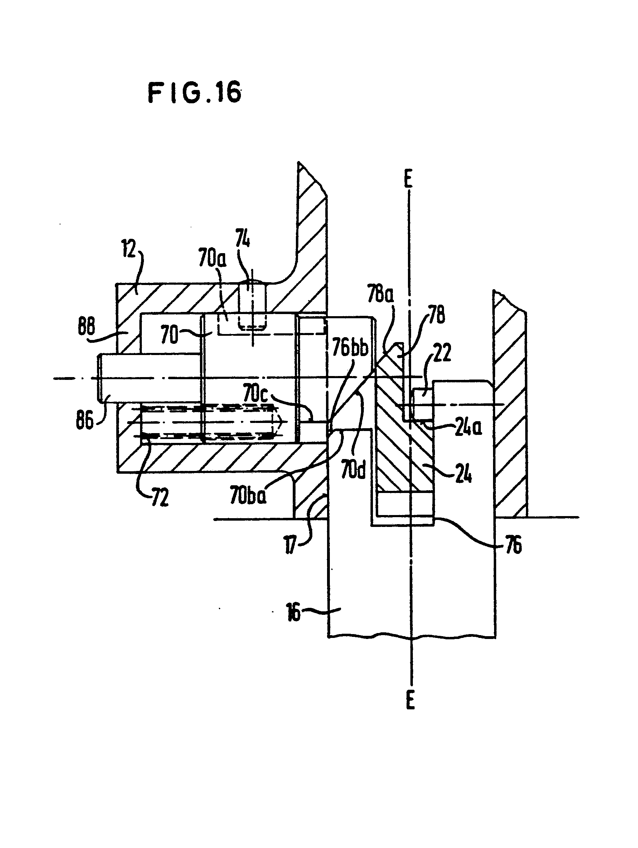

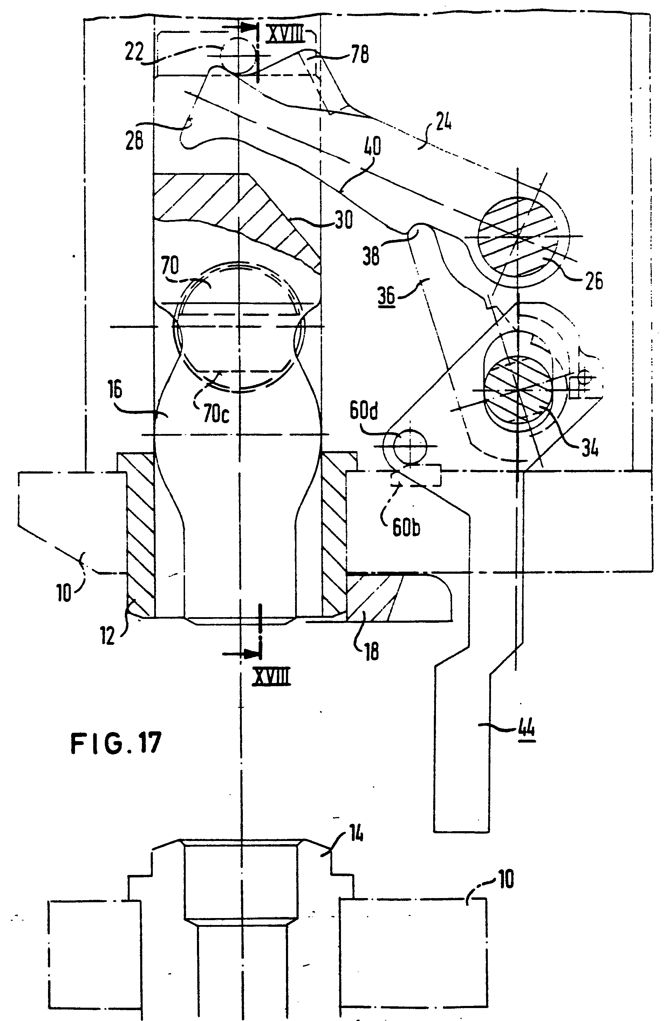

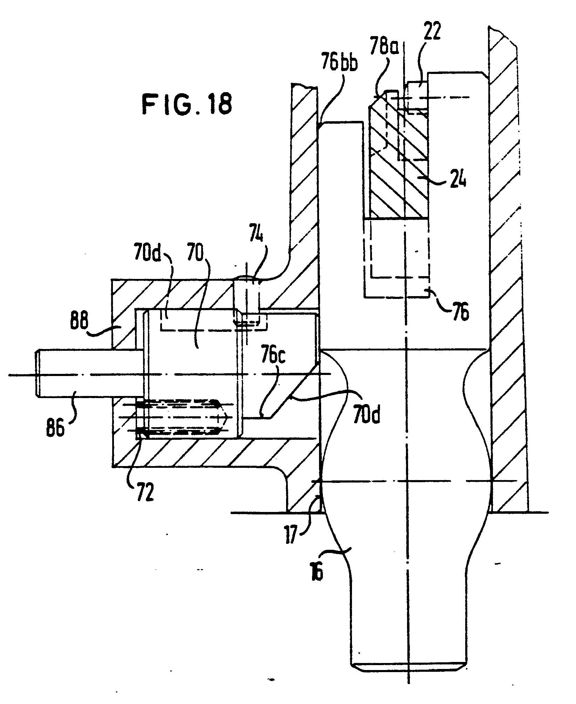

Wenn der Kupplungsbolzen angehoben werden soll, so wird, wie eingangs beschrieben, der Aufwerfhebel 24 in Uhrzeigersinn verschwenkt; dabei wird zunächst die Stellung de Fig. 15 erreicht, in welcher der Aufwerfhebel 24 mit einer Mitnahme- und Haltefläche 24a gegen den Mitnahme- und Haltezapfen 22 anschlägt. Bevor allerdings dieser Anschlag zustandekommt, läuft die Nockenfläche 78a gegen die Schrägfläche 70d an, so daß der Sicherungsbolzen, wie in Fig. 16 dargestellt, durch das Zusammenwirken der Nockenfläche 78a und der Schrägfläche 70d nach links verschoben wird. In Fig. 16 ist die Nockenfläche 78a bereits über die Schrägfläche 70d vollstänig hinweggetreten und der Sicherungsbolzen 70 ist so weit nach links verschoben, daß die Übergangsstelle zwischen der Unterkante 70c und der Schrägfläche 70d aus der Führungsbohrung 17 des Kupplungsbolzens 16 zurückgetreten ist. Wenn nun der Aufwerfhebel 24 weiter nach oben verschwenkt wird in Richtung auf die Haltestellung gemäß Fig. 17 und dabei der Aufwerfhebel 24 über die Mitnahme- und Haltefläche 24a und den Mitnahme- und Haltezapfen 22 den Kupplungsbolzen 16 mit nach oben nimmt, so läuft eine abgeschrägte Steuerfläche 76bb gegen die Schrägfläche 70d an und der Sicherungsbolzen 70 wird nach Maßgabe der Aufwärtsbewegung des Kupplungsbolzens 16 weiter nach links verschoben in die Stellung gemäß Fig. 18.

Zu beachten ist, daß der Kupplungsbolzen 16 mit der Anschlagfläche 76ba unmittelbar gegen den Sicherungsbolzen 70, und zwar dessen Unterkante 70c anfährt und nicht etwa nur durch Vermittlung des Aufwerfhebels 24. Es ist deshalb nicht möglich, daß der Kupplungsbolzen 16 durch die Vermittlung des Aufwerfhebels 24 den zusätzlichen Sicherungsbolzen 70 ausrückt. Insofern kann man von voneinander unabhängigen Sicherungen sprechen, die zum einen von dem Aufwerfhebel 24 gebildet werden (Fig. 13) und zum anderen von der Anschlagfläche 76ba im Zusammenwirken mit der Unterkante 70c (Fig. 14).

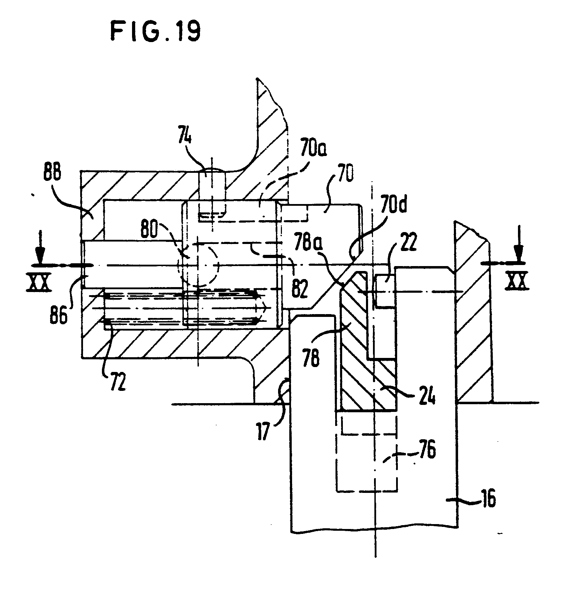

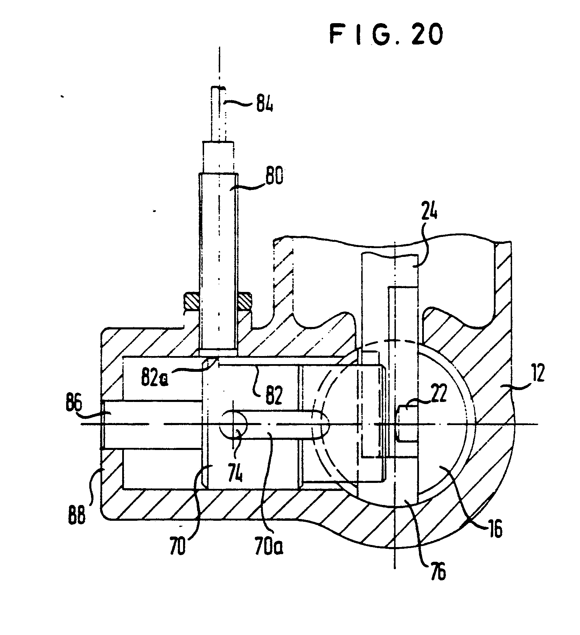

In Fig. 19 und 20 erkennt man einen Positionsfühler 80, welcher durch eine Kante 82 des zusätzlichen Sicherungsbolzens 70 gesteuert ist. In Fig. 19 und 20 befindet sich der zusätzliche Sicherungsbolzen 70 in seiner Sicherungsstellung. Das Vorliegen dieser Sicherungsstellung wird von dem induktiv oder kapazitiv wirkenden Positionsfühler 80 dadurch bewirkt, daß eine Nase 82a der Kante 82 dem Positionsfühler 80 gegenübersteht. Von dem Positionsfühler 80 führt eine Meldeleitung 84 zum Führerhaus und liefert dort einem Signalgeber ein Signal, welches besagt, daß der Kupplungsbolzen sich in Kupplungsstellung befindet und gesichert ist.

An dem zusätzlichen Sicherungsbolzen ist ein Anzeigestift 86 angebracht, welcher eine Wand 88 des Kupplungskörpers 10 durchdringt und mit dieser Wand nur dann bündig ist, wenn der Sicherungsbolzen 70 sich in Sicherungsstellung befindet. Steht er dagegen heraus, so ist die Kupplung noch nicht einwandfrei geschlossen und gesichert. Man kann also aus der Stellung des Anzeigestifts 86 auf den Sicherungszustand der Kupplung schließen. Der Anzeigestift 86 ist jedenfalls dann erkennbar, wenn sich der Fahrer am Orte der Kupplung aufhält.

## Patentansprüche

1. Anhängerkupplung, umfassend einen Kupplungskörper (10), einen in dem Kupplungskörper zwischen einer Kupplungsstellung und einer Nicht-Kupplungsstellung verschiebbar geführten Kupplungsbolzen (16), einen um eine Aufwerfhebelschwenkachse (26) zwischen einer Sicherungsstellung und einer Haltestellung schwenkbar gelagerten Aufwerfhebel (24), welcher in eine Ausnehmung des Kupplungsbolzens (16) eingreift, in einer Sicherungsstellung den Kupplungsbolzen (16) in dessen Kupplungsstellung sichert, bei seinem Übergang von der Sicherungsstellung in eine Haltestellung den Kupplungsbolzen (16) aus der Kupplungsstellung in die Nicht-Kupplungsstellung mitnimmt und in der Haltestellung den Kupplungsbolzen (16) in der Nicht-Kupplungsstellung hält, einen zusätzlichen, senkrecht zur Achse des Kupplungsbolzens (16) vorzugsweise annähernd in Richtung der Aufwerfhebelschwenkachse (26) verschiebbaren Sicherungsbolzen (70), welcher in einer Sicherungsstellung einer aufwärts gerichteten Anschlagfläche (76ba) seitlich am Kupplungsbolzen gegenübersteht und den Kupplungsbolzen (16) in seiner Kupplungsstellung sichert und einen Ausrücknocken (78) zum Ausrücken des zusätzlichen Sicherungsbolzens aus seiner Sicherungsstellung, welcher Ausrücknocken (78) mit dem Aufwerfhebel (24) zur gemeinsamen Drehung verbunden ist und den zusätzlichen Sicherungsbolzen (70) wenigstens teilweise aus seiner Sicherungsstellung drückt, bevor der durch den Aufwerfhebel (24) in Richtung auf die Nicht-Kupplungsstellung mitgenommene Kupplungsbolzen (16) gegen den zusätzlichen Sicherungsbolzen (70) anschlägt, dadurch gekennzeichnet, daß

a) die Ausnehmung in dem Kupplungsbolzen (16) von einem nach oben offenen, gestuften Schlitz (76) gebildet ist mit einer ersten, tiefer eingeschnittenen Schlitzstufe (76a) zentrisch zu einer zur Aufwerfhebelschwenkachse (26) senkrechten, die Achse des Kupplungsbolzens (16) enthaltenden Mittelebene (E - E) und einer zweiten, weniger tief eingeschnittenen, seitlich offenen Schlitzstufe (76b) auf der dem zusätzlichen Sicherungsbolzen (70) zugekehrten Seite dieser Mittelebene (E - E), wobei der Aufwerfhebel (24) in der ersten Schlitzstufe (76a) aufgenommen ist;

b) die erste Schlitzstufe (76a) auf einem Teil ihrer senkrecht zu der Mittelebene (E - E) sich erstreckenden Breite, und zwar auf der von der zweiten Schlitzstufe (76b) abgelegenen Seite der Mittelebene (E - E) von einem Mitnahme- und Haltezapfen (22) am oberen Endabschnitt des Kupplungsbolzens (16) überquert ist, mit welchem der Aufwerfhebel (24) zusammenwirkt;

c) der Ausrücknocken (78) als eine innerhalb der ersten Schlitzstufe (76a) und wenigstens teilweise unterhalb des oberen Endes des Kupplungsbolzens (16) gelegene Überhöhung des Aufwerfhebels (24) ausgebildet ist, beschränkt auf den von dem Mitnahme- und Haltezapfen (22) freigelassenen Bereich der ersten Schlitzstufe (76a) und

d) der Schlitzgrund (76ba) der zweiten Schlitzstufe (76b) die Anschlagfläche zum Anschlag gegen den zusätzlichen Sicherungsbolzen (70) bildet.

2. Anhängerkupplung nach Anspruch 1, dadurch gekennzeichnet, daß an dem Kupplungsbolzen (16) neben dem Schlitzgrund (76ba) der zweiten Schlitzstufe (76b) eine Steuerfläche (76bb) oder Steuerkante angebracht ist, welche mit dem durch den Ausrücknocken (78) teilweise aus seiner Sicherungsstellung herausgedrückten zusätzlichen Sicherungsbolzen (70) insbesondere mit einer Schrägfläche (70d) des zusätzlichen Sicherungsbolzens (70) zusammentritt und den zusätzlichen Sicherungsbolzen (70) nach Maßgabe der Aufwärtsbewegung des Kupplungsbolzens (16) weiter ausrückt.

3. Anhängerkupplung nach einem der Ansprüche 1 oder 2, dadurch gekennzeichnet, daß dem zusätzlichen Sicherungsbolzen (70) ein Positionsfühler (80) zugeordnet ist, welcher mit einer Kupplungszustandsanzeigevorrichtung verbunden ist.

4. Anhängerkupplung nach Anspruch 3, dadurch gekennzeichnet, daß der Positionsfühler (80) ein induktiv wirkender Positionsfühler ist.

5. Anhängerkupplung nach einem der Ansprüche 1 bis 4, dadurch gekennzeichnet, daß ein Abstützhebel (36) um eine zu der Aufwerfhebelschwenkachse (26) parallele und tiefer als diese gelegene Abstützhebelschwenkachse (34) schwenkbar gelagert ist, daß dieser Abstützhebel (36) mit einem Betätigungshandgriff drehfest verbunden ist und daß der Abstützhebel (36) mit einer Mitnahme- und Abstützspitze (38) an einer Mitnahmekante (40) des Aufwerfhebels (24) angreift.

## Claims

1. Trailer coupling, comprising a coupling body (10), a coupling pin (16) displaceably guided in the coupling body between a coupled position and an uncoupled position, a trip lever (24), pivotally journalled about a trip lever pivot axis (26) between a securing position and a holding position, which trip lever engages into a recess of the coupling pin (16), secures the coupling pin (16) in its coupled position when in a securing position, entrains the coupling pin (16) out of the coupled position into the uncoupled position during the movement of the trip lever from the securing position into a holding position and, in the holding position, holds the coupling pin (16) in the uncoupled position, comprising an additional securing pin (70), displaceable perpendicularly to the axis of the coupling pin (16) preferably approximately in the direction of the trip lever pivot axis (26), which (securing pin) when in a securing position is opposite an upwardly orientated abutment surface (76ba) laterally on the coupling pin and secures the coupling pin (16) in its coupled position, and comprising a disengaging cam (78) for disengaging the additional securing pin out of its securing position, which disengaging cam (78) is connected with the trip lever (24) for common rotation and presses the additional securing pin (70) at least partly out of its securing position before the coupling pin (16), entrained by the trip lever (24) towards the uncoupled position, strikes against the additional securing pin (70), characterized in that

a) the recess in the coupling pin (16) is formed of an upwardly open, stepped slit (76), having a first, deeper slit step (76a) centric to a central plane (E - E), perpendicular to the trip lever pivot axis (26) and containing the axis of the coupling pin (16) and having a second, less deep, laterally open slit step (76b) on the side of the central plane (E - E) nearest the additional securing pin (70), the trip lever (24) being received in the first slit step (76a);

b) the first slit step (76a) is traversed, over a portion of its width extending perpendicularly to the central plane (E - E), on the side of the central plane (E - E) remote from the second slit step (76b), by an entraining and holding pin (22) at the upper end portion of the coupling pin (16), with which (entraining and holding pin) the trip lever (24) cooperates;

c) the disengaging cam (78) is formed as a projection of the trip lever (24) within the first slit step (76a) and at least partly below the upper end of the coupling pin (16), is limited to the region of the first slit step (76a) unoccupied by the entraining and holding pin (22), and

d) the base (76ba) of the second slit step (76b) constitutes the abutment surface for abuting against the additional securing pin (70).

2. Trailer coupling according to claim 1, characterized in that, on the coupling pin (16), adjacent to the slit base (76ba) of the second slit step (76b), a control surface (76bb) or control edge is formed, which meets the additional securing pin (70) especially on an inclined surface (70d) of the additional securing pin (70) when the securing pin has been partly pressed out of its securing position by the disengaging cam (78), and disengages the additional securing pin (70) further according to the upward movement of the coupling pin (16).

3. Trailer coupling according to one of claims 1 or 2, characterized in that a position sensor (80) is associated with the additional securing pin (70), which position sensor is connected with a coupling state indicator device.

4. Trailer coupling according to claim 3, characterized in that the position sensor (80) is an inductively acting position sensor.

5. Trailer coupling according to one of claims 1 to 4, characterized in that a support lever (36) is pivotally journalled about a support lever pivot axis (34), parallel to the trip lever pivot axis (26) and lower than the latter, that this support lever (36) is non-rotatably keyed to an actuating handle, and that the support lever (36) engages, by an entraining and supporting tip (38), against an entraining edge (40) of the trip lever (24).

**Revendications**

1. Attelage pour remorque, comprenant un corps d'attelage (10), un boulon d'attelage (16) guidé en coulissement dans le corps d'attelage entre une position attelée et une position dételée, un levier de relevage (24) monté pivotant autour d'un axe de pivotement de levier de relevage (26) entre une position de blocage et une position de maintien - levier qui s'engage dans un évidement du boulon d'attelage (16), qui à une position de blocage bloque le boulon d'attelage (16) à sa position attelée, qui lors de son passage de la position de blocage à une position de retenue entraîne conjointement le boulon d'attelage (16) de la position attelée à la position dételée, et qui à la position de maintien maintient le boulon d'attelage (16) à la position dételée - un boulon de blocage supplémentaire (70) pouvant coulisser perpendiculairement à l'axe du boulon d'attelage (16) et de préférence approximativement en direction de l'axe de pivotement de levier de relevage (26) - lequel boulon (70), à une position de blocage d'une face de sutée (76ba) tournée vers le haut, se trouve latéralement en vis-à-vis du boulon d'attelage et bloque le boulon d'attelage (16) à sa position attelée - et un ergot de désengagement (78) pour désengager le boulon de blocage supplémentaire de sa position de blocage, lequel ergot de desengagement (78) est relié au levier de relevage (24) en vue de leur rotation conjointe et pousse le boulon de blocage supplémentaire (70) au moins partiellement hors de sa position de blocage, avant que le boulon d'attelage (16), conjointement entraîné par le levier de relevage (24) en direction de la position dételée, vienne buter contre le boulon de blocage supplémentaire (70),

caractérisé en ce que

a) l'évidement prévu dans le boulon d'attelage (16) consiste en une fente étagée (76) ouverte vers le haut, avec un premier étage de fente (76a) creusé plus profond et centralement par rapport à un plan médian (E - E) perpendiculaire à l'axe de pivotement de levier de relevage (26) et contenant l'axe du boulon d'attelage (16), et avec un deuxième étage de fente (76b) creusé moins profond, ouvert latéralement et prévu sur le côté de ce plan médian (E - E) qui est tourne vers le boulon de blocage supplémentaire (70), le levier de relevage (24) étant reçu dans le premier étage de fente (76a);

b) le premier étage de fente (76a) est, sur une partie de sa largeur s'étendant perpendiculairement au plan médian (E - E), et plus précisément sur le côté du plan médian (E - E) qui est éloigné du deuxième étage de fente (76b), traversé par un tenon d'entraînement et de maintien (22) prévu sur la partie finale supérieure du boulon d'attelage (16), tenon avec lequel coopère le levier de relevage (24);

c) l'ergot de désengagement (78) est réalisé sous la forme d'une surélévation du levier de relevage (24) située à l'intérieur du premier étage de fente (76a) et au moins partiellement en dessous de l'extrémité supérieure du boulon d'attelage (16), et limitée à la région du premier étage de fente (76a) qui est laissée libre par le tenon d'entraînement et de maintien (22); et

d) le fond (76ba) du deuxième étage de fente (76b) constitue la face de butée pour venir buter contre le boulon de blocage supplémentaire (70).

2. Attelage pour remorque selon la revendication 1, caractérisé en ce qu'une face de commande (76b) ou bord de commande est formé sur le boulon d'attelage (16) à côté du fond (76ba) du deuxième étage de fente (76b), face qui rencontre le boulon de blocage supplémentaire (70) qui est poussé par l'ergot de desengagement (78) partiellement hors de sa position de blocage, et qui rencontre en particulier une face oblique (70d) du boulon de blocage supplémentaire (70), et qui poursuit le désengagement du boulon de blocage supplémentaire (70) dans la mesure du déplacement vers le haut du boulon d'attelage (16).

3. Attelage pour remorque selon la revendication 1 ou 2, caractérisé en ce qu un capteur de position (80) est associé au boulon de blocage supplémentaire (70), capteur qui est relié à un dispositif indicateur d'état d'attelage.

4. Attelage pour remorque selon la revendication 3, caractérisé en ce que le capteur de position (80) est un capteur de position inductif.

5. Attelage pour remorque selon l'une quelconque des revendications 1 à 4, caractérisé en ce qu'un levier de soutien (36) est monté pivotant autour d'un axe de pivotement de levier de soutien (34) parallèle à l'axe de pivotement de levier de relevage (26) et situé plus bas que ce dernier, en ce que ce levier de soutien (36) est relié solidairement en rotation à une poignée d'actionnement, et en ce que le levier de soutien (36) agit par une pointe d'entraînement et de soutien (38) sur un bord d'entraînement (40) du levier de relevage (24).

# F I G.1

FIG. 2

FIG.3

FIG.4

# F I G . 5

FIG.6

0 149 453

FIG.7

13

**0 149 453**

FIG.8

FIG. 9

0 149 453

FIG.10

FIG.11

FIG.12

# F I G.13

# FIG.14

FIG.15

# FIG.16

**FIG.17**

FIG. 18

FIG.19

# F I G. 20